(19) Europäisches Patentamt / European Patent Office / Office européen des brevets

(11) **EP 4 387 395 A1**

(12) **EUROPEAN PATENT APPLICATION**

(43) Date of publication:
**19.06.2024 Bulletin 2024/25**

(21) Application number: **22213667.3**

(22) Date of filing: **15.12.2022**

(51) International Patent Classification (IPC):
**H05B 45/14** $^{(2020.01)}$        **H05B 45/385** $^{(2020.01)}$

(52) Cooperative Patent Classification (CPC):
**H05B 45/14; H02M 3/01; H02M 3/33523;**
**H02M 3/33571; H05B 45/385; H05B 45/39;**
**H05B 45/59**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(71) Applicant: **Tridonic GmbH & Co. KG**
**6851 Dornbirn (AT)**

(72) Inventors:
• **Schneider, Miguel Philipp**
  **6850 Dornbirn (AT)**
• **Maldoner, Jakob**
  **6850 Dornbirn (AT)**
• **Walch, Patrick**
  **6850 Dornbirn (AT)**

(74) Representative: **Rupp, Christian et al**
**Mitscherlich PartmbB**
**Patent- und Rechtsanwälte**
**Karlstraße 7**
**80333 München (DE)**

(54)    **RESONANT HYBRID FLYBACK CONVERTER FOR A LED-BASED LOAD**

(57)    A resonant hybrid flyback converter (10) for a LED-based load (13c) is provided. Said resonant hybrid flyback converter (10) comprises a half-bridge (11) comprising a high-side switch (11a) and a low-side switch (11b), a flyback resonant tank (12) comprising a transformer with a primary side (15a) and a secondary side (15b), and a processing unit (14). In this context, the half-bridge (11) is configured to supply said primary side (15a), wherein the secondary side (15b) is configured to supply the LED-based load (13c). Additionally, the processing unit (14) is configured to sense a LED voltage with respect to the LED-based load (13c) and/or a half-bridge current with respect to the primary side (15a). In further addition to this, the processing unit (14) is configured to control an on-time of the low-side switch (11b) on the basis of the LED voltage and/or an on-time of the high-side switch (11a) on the basis of a peak detection with respect to the half-bridge current.

Fig. 1

EP 4 387 395 A1

## Description

The invention relates to a resonant hybrid flyback converter for a LED-based load. In this context, it is noted that "hybrid flyback" can especially be understood as "half-bridge circuit supplying a flyback resonant tank".

Generally, in times of an increasing use of LED lighting means in many different areas of life, there is a growing need of a resonant hybrid flyback converter for a LED-based load, a system comprising such a resonant hybrid flyback converter and a LED-based load, and a method for operating a resonant hybrid flyback converter for a LED-based load in order to ensure an efficient and reliable supply of said LED-based load especially in the sense of an improvement of flicker during load transitions and a smaller peak to peak magnetizing current.

However, there are no resonant hybrid flyback converters allowing for such improvements especially in the sense of an improvement of flicker during load transitions and a smaller peak to peak magnetizing current.

Accordingly, there is the object to provide a resonant hybrid flyback converter for a LED-based load, a system comprising such a resonant hybrid flyback converter and a LED-based load, and a method for operating a resonant hybrid flyback converter for a LED-based load, thereby ensuring a high efficiency and reliability especially in the sense of an improvement of flicker during load transitions and a smaller peak to peak magnetizing current.

This object is solved by the features of the first independent claim for a resonant hybrid flyback converter for a LED-based load, the features of the second independent claim for a system comprising such a resonant hybrid flyback converter and a LED-based load, and the features of the third independent claim for a method for operating a resonant hybrid flyback converter for a LED-based load. The dependent claims contain further developments.

According to a first aspect of the invention, a resonant hybrid flyback converter for a LED-based load is provided. Said resonant hybrid flyback converter comprises a half-bridge comprising a high-side switch and a low-side switch, a flyback resonant tank comprising a transformer with a primary side and a secondary side, and a processing unit. In this context, the half-bridge is configured to supply said primary side, wherein the secondary side is configured to supply the LED-based load. Additionally, the processing unit is configured to sense a LED voltage with respect to the LED-based load and/or a half-bridge current with respect to the primary side. In further addition to this, the processing unit is configured to control an on-time of the low-side switch on the basis of the LED voltage and/or an on-time of the high-side switch on the basis of a peak detection with respect to the half-bridge current. Advantageously, this allows for ensuring a high efficiency and reliability especially in the sense of an improvement of flicker during load transitions and a smaller peak to peak magnetizing current.

According to a first preferred implementation form of the first aspect of the invention, the processing unit is configured to adjust an operating point with respect to controlling the on-time of the high-side switch on the basis of controlling the on-time of the low-side switch.

Advantageously, for instance, not only efficiency but also reliability can further be increased.

According to a second preferred implementation form of the first aspect of the invention, the processing unit is configured to control the on-time of the low-side switch such that for the case that the LED voltage increases, the on-time of the low-side switch decreases especially in a linear, not linear, continuous, stepwise, or ramp manner. Advantageously, for example, this allows for operating points outside a certain output window or for a wider operation range, respectively.

According to a further preferred implementation form of the first aspect of the invention, the processing unit is configured to control the on-time of the high-side switch such that for the case that the LED voltage increases, the on-time of the high-side switch increases especially in a linear, not linear, continuous, stepwise, or ramp manner. Advantageously, for instance, both efficiency and reliability can further be increased.

According to a further preferred implementation form of the first aspect of the invention, for the case of a stepwise decrease of the on-time of the low-side switch, the on-time of the high-side switch increases in a ramp-shaped manner. Advantageously, for example, the corresponding LED voltage range can be divided into different operating areas, wherein each of said different operating areas comprises a respective constant on-time of the low-side switch.

According to a further preferred implementation form of the first aspect of the invention, for the case of a linear decrease of the on-time of the low-side switch, the on-time of the high-side switch increases in a nonlinear manner especially at least over a substantial portion of a voltage range with respect to the LED voltage. Advantageously, for instance, a hysteresis mode can be implemented preferably by the processing unit especially to avoid "uncontrolled back and forth" adjustments of the on-time of the low-side switch at a steady operating point.

According to a further preferred implementation form of the first aspect of the invention, for the case of a nonlinear decrease of the on-time of the low-side switch, the on-time of the high-side switch increases in a linear manner. Advantageously, for example, this allows for an on-time of the low-side switch, which shows a flatter slope in high LED voltages. Further advantageously, efficiency can further be increased especially in the sense of a more flexible design of the magnetic resonant tank and a mode being easy in implementation and feasibility.

According to a further preferred implementation form of the first aspect of the invention, the resonant hybrid flyback converter or the processing unit comprises a controlling element, preferably a proportional integral controlling element, wherein the peak detection is based on a controlled variable received from the controlling element, preferably the proportional integral controlling element. Advantageously, for instance, a high accuracy and quickness of the corresponding control can be ensured.

According to a further preferred implementation form of the first aspect of the invention, the processing unit is configured to sense a LED current with respect to the LED-based load, wherein the controlling element, preferably the proportional integral controlling element, is configured to form the controlled variable on the basis of the LED current and a target LED current being especially settable. Advantageously, for example, the target LED current can be set by a user especially during operation.

According to a further preferred implementation form of the first aspect of the invention, the processing unit is configured to sense the on-time of the high-side switch. In addition to this or as an alternative, the processing unit is configured to control the on-time of the low-side switch on the basis of the on-time of the high-side switch. Advantageously, for instance, reliability can further be increased, thereby also reducing inefficiencies.

According to a second aspect of the invention, a system is provided. Said system comprises a resonant hybrid flyback converter according to the first aspect of the invention or any of the preferred implementation form thereof, respectively, and a LED-based load being supplied by said resonant hybrid flyback converter. Advantageously, this allows for ensuring a high efficiency and reliability especially in the sense of an improvement of flicker during load transitions and a smaller peak to peak magnetizing current.

According to a third aspect of the invention, a method for operating a resonant hybrid flyback converter for a LED-based load, especially a resonant hybrid flyback converter according to the first aspect of the invention or any of its preferred implementation forms, respectively, is provided. Said method comprises the steps of sensing a LED voltage with respect to the LED-based load and/or a half-bridge current with respect to a primary side of a transformer of a flyback resonant tank of the resonant hybrid flyback converter, said primary side being supplied by a half-bridge comprising a high-side switch and a low-side switch, said half-bridge being comprised by the resonant hybrid flyback converter, and controlling an on-time of the low-side switch on the basis of the LED voltage and/or an on-time of the high-side switch on the basis of a peak detection with respect to the half-bridge current. Advantageously, this allows for ensuring a high efficiency and reliability especially in the sense of an improvement of flicker during load transitions and a smaller peak to peak magnetizing current.

According to a first preferred implementation form of the third aspect of the invention, the method further comprises the step of adjusting an operating point with respect to controlling the on-time of the high-side switch on the basis of controlling the on-time of the low-side switch. Advantageously, for instance, not only efficiency but also reliability can further be increased.

According to a second preferred implementation form of the third aspect of the invention, the method further comprises the step of controlling the on-time of the low-side switch such that for the case that the LED voltage increases, the on-time of the low-side switch decreases especially in a linear, not linear, continuous, stepwise, or ramp manner. Advantageously, for example, this allows for operating points outside a certain output window or for a wider operation range, respectively.

According to a further preferred implementation form of the third aspect of the invention, the method further comprises the step of controlling the on-time of the high-side switch such that for the case that the LED voltage increases, the on-time of the high-side switch increases especially in a linear, not linear, continuous, stepwise, or ramp manner. Advantageously, for instance, both efficiency and reliability can further be increased.

It is noted that all the explanations or further implementation forms according to the first aspect of the invention analogously apply for the third aspect of the invention.

Exemplary embodiments of the invention are now further explained with respect to the drawings by way of example only, and not for limitation. In the drawings:

Fig. 1    shows an exemplary embodiment of the first aspect of the invention in combination with the second aspect of the invention;

Fig. 2    shows an abstract illustration of the first and the second aspect of the invention especially for explaining corresponding functioning in greater detail;

Fig. 3    shows a first exemplary diagram of low-side switch and high-side switch on-times over different LED voltages;

Fig. 4    shows a second exemplary diagram of low-side switch and high-side switch on-times over different LED voltages;

Fig. 5    shows a third exemplary diagram of low-side switch and high-side switch on-times over different LED voltages;

Fig. 6    shows an exemplary diagram of a voltage across the transformer over time;

Fig. 7    shows an exemplary circuit diagram for further illumination of Fig. 1 or Fig. 2, respectively; and

Fig. 8    shows a flow chart of an embodiment of the third aspect of the invention.

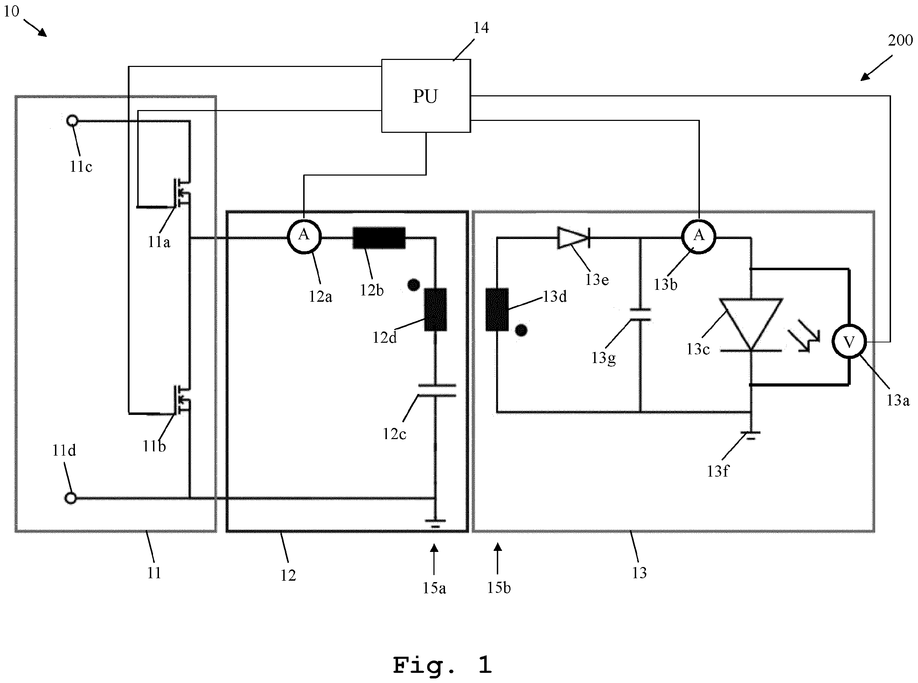

With respect to Fig. 1, an exemplary embodiment of the inventive resonant hybrid flyback converter 10 for a LED-based load, exemplarily a LED (light-emitting diode) 13c.

For the sake of completeness, it is noted that said Fig. 1 additionally illustrates an exemplary embodiment of the inventive system 200 comprising said resonant hybrid flyback converter 10 and said LED-based load, exemplarily said LED 13c, being supplied by the resonant hybrid flyback converter 10.

In accordance with Fig. 1, the resonant hybrid flyback converter 10 comprises a half-bridge 11 comprising a high-side switch, exemplarily a first field-effect transistor 11a, and a low-side switch, exemplarily a second field-effect transistor 11b.

With respect to said field-effect transistors 11a and 11b, it is noted that said transistors are exemplarily of an n-channel enhancement type.

Furthermore, the resonant hybrid flyback converter 10 comprises a flyback resonant tank 12 comprising a transformer with a primary side 15a and a secondary side 15b. It is noted that the half-bridge 11 is configured to supply said primary side 15a, wherein the secondary side 15b is configured to supply the LED-based load, exemplarily the LED 13c.

Moreover, the above-mentioned primary side 15a comprises a series connection of a leakage inductance 12b, which can be optional or omitted, respectively, a corresponding transformer main inductance 12d and a capacitance 12c, exemplarily a resonance capacitor. In this context, it is noted that a half-bridge current as referred to in the following especially flows through said series connection.

As it can further be seen from Fig. 1, the resonant hybrid flyback converter 10 further comprises supplying means 13 being configured to be supplied by the secondary side 15b and to supply the LED-based load or the LED 13c, respectively.

In this context, the supplying means 13 comprise a switch and/or a diode, exemplarily a diode 13e, and a capacitance, exemplarily an output capacitor 13g.

Furthermore, the capacitance 13g is exemplarily connected in parallel to the LED 13c, whereas the diode 13e is exemplarily connected in series to said parallel connection of the LED 13c and the capacitance 13g.

In particular, a first terminal of a transformer secondary inductance 13d is connected to a first terminal, exemplarily an anode terminal, of the diode 13e, whereas a second terminal, exemplarily a cathode terminal, of said diode 13e is connected to a first terminal of the capacitance 13g and to a first terminal of the LED 13c.

In addition this, a second terminal of the transformer secondary inductance 13d is connected to a second terminal of the capacitance 13g and to a second terminal of the LED 13c. Said second terminal of the LED 13c is exemplarily connected to a first voltage potential, preferably ground, more preferably ground 13f of the secondary side 15b.

Again, with respect to the half-bridge 11, it is noted that a first terminal, exemplarily a drain terminal, of the first field-effect transistor 11a is connected to a second voltage potential, preferably a supply voltage 11c, wherein a second terminal, exemplarily a source terminal, of said first field-effect transistor 11a is connected to a first terminal, exemplarily a drain terminal, of the second field-effect transistor 11b. Additionally, a second terminal, exemplarily a source terminal, of said second field-effect transistor 11b is connected to a third voltage potential, preferably ground, more preferably ground 11d of the primary side 15a.

With respect to the above-mentioned series connection of primary side 15a or the resonant tank 12, respectively, it is noted that the first terminal, exemplarily the drain terminal, of the second field-effect transistor 11b is connected to a first terminal of the leakage inductance 12b, wherein a second terminal of said leakage inductance 12b is connected to a first terminal of the transformer main inductance 12d. Additionally, a second terminal of said transformer main inductance 12d is connected to a first terminal of the capacitance 12c, wherein a second terminal of said capacitance 12c is connected to the second terminal, exemplarily the source terminal, of the second field-effect transistor 11b.

Furthermore, the resonant hybrid flyback converter 10 comprises a processing unit 14, wherein the processing unit 14 is configured to sense a LED voltage with respect to the LED-based load, exemplarily the LED 13c, and/or the half-bridge current with respect to the primary side 15a.

In this context, the resonant hybrid flyback converter 10 exemplarily comprises voltage sensing means 13a especially being connected in parallel to the LED-based load or LED 13c, respectively, and/or current sensing means 12a especially being connected in series to the above-mentioned series connection of the primary side 15a or the resonant tank 12, respectively. It is noted that the processing unit 14 is exemplarily connected to voltage sensing means 13a and/or the current sensing means 12a.

In addition to this, the processing unit 14 is configured to control an on-time of the low-side switch, exemplarily the second field-effect transistor 11b, on the basis of the LED voltage and/or an on-time of the high-side switch, exemplarily the first field-effect transistor 11a, on the basis of a peak detection with respect to the half-bridge current.

In this context, the processing unit 14 is exemplarily connected to a third terminal, exemplarily a gate terminal, of the first field-effect transistor 11a, and/or to a third terminal, exemplarily a gate terminal, of the second field-effect transistor 11b. It is noted that the processing unit 14 is exemplarily configured to perform said peak detection with respect to the half-bridge current.

It might be particularly advantageous if the processing unit 14 is configured to adjust an operating point with respect to controlling the on-time of the high-side switch, exemplarily the first field-effect transistor 11a, on the basis of controlling the on-time of the low-side switch, exemplarily the second field-effect transistor 11b.

Furthermore, the processing unit 14 may preferably be configured to control the on-time of the low-side switch, exemplarily the second field-effect transistor 11b, such that for the case that the LED voltage increases, the on-time of the low-side switch, exemplarily the second field-effect transistor 11b, decreases especially in a linear, not linear, continuous, stepwise, or ramp manner.

Moreover, the processing unit 14 may preferably be configured to control the on-time of the high-side switch, exemplarily the first field-effect transistor 11a, such that for the case that the LED voltage increases, the on-time of the high-side switch, exemplarily the first field-effect transistor 11a, increases especially in a linear, not linear, continuous, stepwise, or ramp manner.

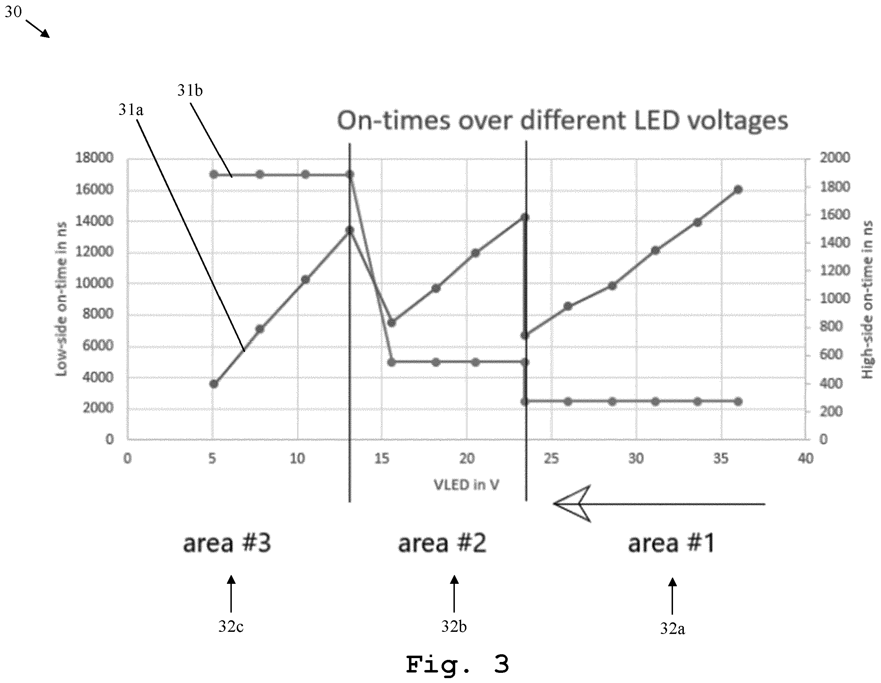

In accordance with Fig. 3, it might be particularly advantageous if for the case of a stepwise decrease of the on-time of the low-side switch or the second field-effect transistor 11b, respectively, exemplarily according to curve 31b, the on-time of the high-side switch or the first field-effect transistor 11a, respectively, increases in a ramp-shaped manner, exemplarily according to curve 31a. It is noted that the processing unit 14 may preferably be configured to control the corresponding on-times accordingly.

With respect to said Fig. 3 illustrating a first exemplary diagram 30 of low-side switch and high-side switch on-times over different LED voltages, it is further noted that said diagram 30 especially depicts an example of the high-side and low-side on-times over a LED voltage range of 5 to 36 V. In this context, there are three exemplary different operating areas 32a, 32b, 32c, each of which with a respective constant low-side on-time.

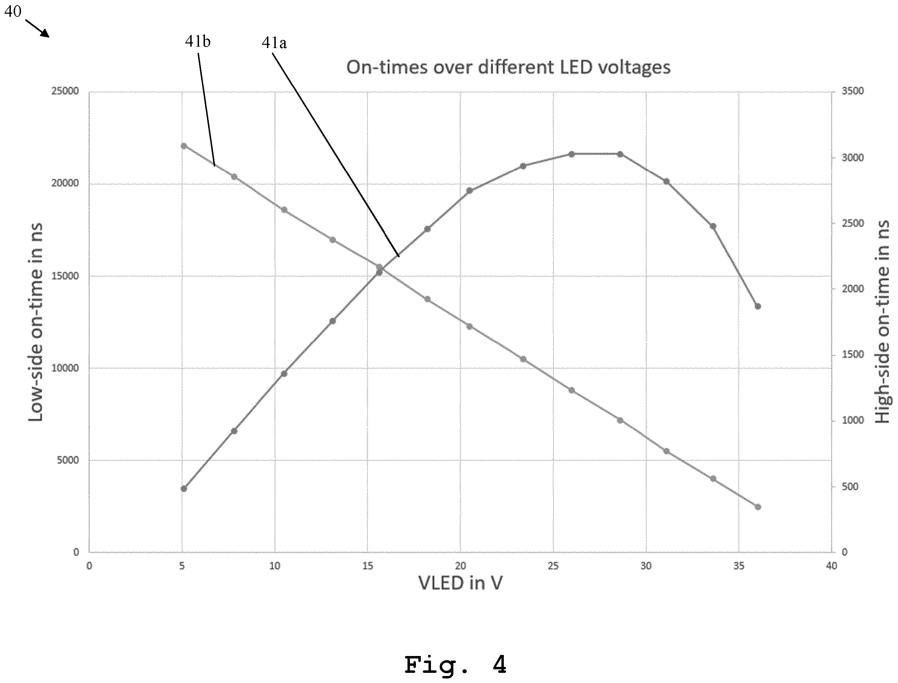

Furthermore, in accordance with Fig. 4 showing a second exemplary diagram 40 of low-side switch and high-side switch on-times over different LED voltages, it might be particularly advantageous if for the case of a linear decrease of the on-time of the low-side switch or the second field-effect transistor 11b, respectively, exemplarily according to curve 41b, the on-time of the high-side switch or the first field-effect transistor 11a, respectively, increases in a nonlinear manner especially at least over a substantial portion of a voltage range with respect to the LED voltage, exemplarily according to curve 41a. It is noted that the processing unit 14 may preferably be configured to control the corresponding on-times accordingly.

Especially in the context of Fig. 4, it is further noted that it might be particularly advantageous if the LED voltage is observed continuously and especially in case of an output load change, the low-side on-time is adjusted. Advantageously, instead of different on-time areas with big low-side on-time steps, a smooth linear low-side on-time slope can be achieved. Further advantageously, especially to avoid "uncontrolled back and forth" adjustments of the low-side on-time at a steady operating point, additional a hysteresis mode can be implemented. Said hysteresis mode preferably guarantees that the low-side on-time is adjusted just if the LED voltage changes by a defined voltage difference. Accordingly, the processing unit 14 may preferably be configured to implement a hysteresis mode, especially such a hysteresis mode. In this context, the processing unit 14 may especially be configured to adjust the on-time of the low-side switch or the second field-effect transistor 11b, respectively, just if the LED voltage changes preferably by a defined voltage difference, more preferably by a predefined voltage difference, most preferably by a predefined voltage difference being settable especially by a user.

In this context, it is further noted that the processing unit 14 may preferably be configured to monitor the LED voltage, to determine the on-time of the low-side switch, and to adjust said on-time of the low-side switch.

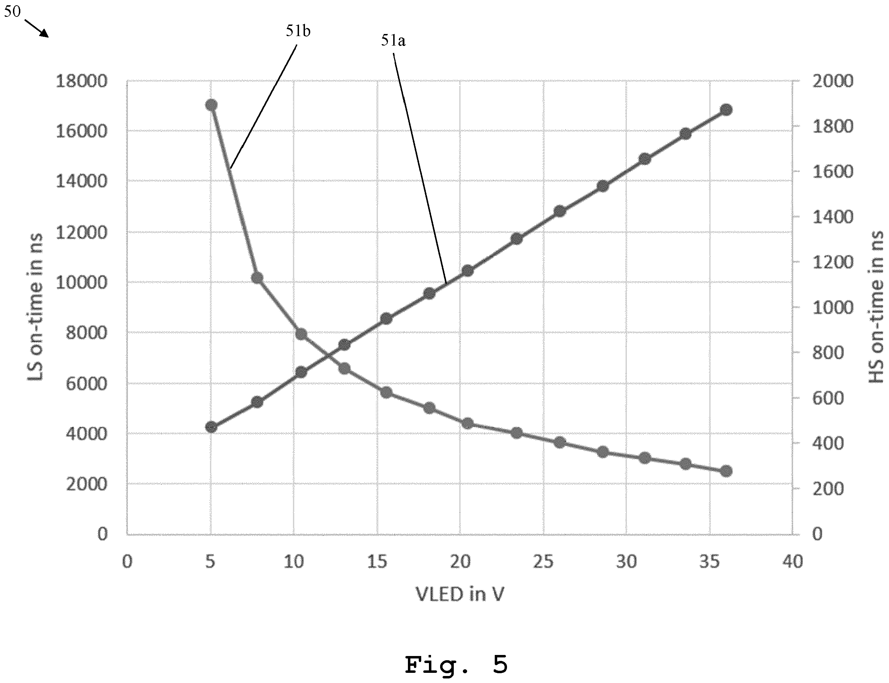

Moreover, in accordance with Fig. 5 depicting a third exemplary diagram 50 of low-side switch and high-side switch on-times over different LED voltages, it might be particularly advantageous if for the case of a nonlinear decrease of the on-time of the low-side switch or the second field-effect transistor 11b, respectively, exemplarily according to curve 51b, the on-time of the high-side switch or the first field-effect transistor 11a, respectively, increases in a linear manner, exemplarily according to curve 51a. It is noted that the processing unit 14 may preferably be configured to control the corresponding on-times accordingly.

Especially in the context of Fig. 5, it is further noted that it might be particularly advantageous if the low-side on-time is set in dependency to the output voltage or LED voltage, respectively, such that instead of the low-side on-time, the high-side on-time results in a linear slope over the load range. This can exemplarily be done by keeping a constant transformer 'voltage second' especially during the period where the energy is transferred to the output or LED-based load, respectively. This operating variant where the low-side on-time especially shows a flatter slope in high LED voltages offers several advantages such as an improvement of flicker during load transitions, a smaller peak to peak magnetizing current, a higher efficiency, a more flexible design of magnetic resonant tank 12, and a mode being easy in implementation and feasibility.

In this context, it is further noted that the processing unit 14 may preferably be configured to monitor the LED voltage, to determine the on-time of the low-side switch especially for said constant 'voltage second', and to adjust said on-time of the low-side switch.

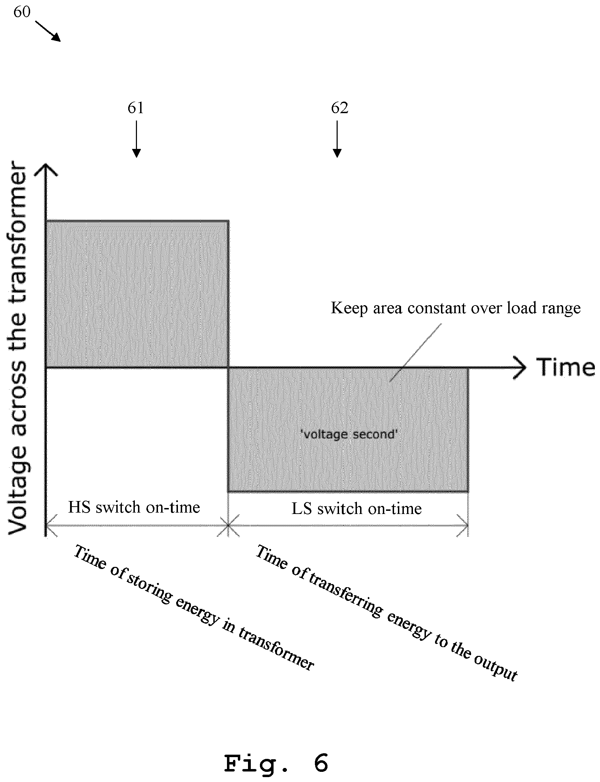

With respect to the above-mentioned constant transformer 'voltage second' or the constant 'voltage second', respectively, Fig. 6 illustrating an exemplary diagram 60 of a voltage across the transformer over time, said transformer being especially supplied by the half-bridge 11, shows a first area 61 and a second area 62.

Within the first area 61 or the corresponding on-time of the high-side switch, respectively, energy is stored in the transformer, whereas within the second area 62 or the corresponding on-time of the low-side switch, respectively, energy is transferred to the output or the LED-based load such as LED 13c of Fig. 1, respectively. As it can be seen from Fig. 6, with respect to said second area 62, it is noted that the second area 62 comprises the above-mentioned 'voltage second', wherein said second area 62 is especially kept constant over the corresponding load range.

With respect to the constant 'voltage second' or the 'voltage second', respectively, the LED voltage, and the on-time of the low-side switch, it is noted that it might be particularly advantageous if the following equation applies:

$$LSontime = \frac{1}{VLED} * VoltageSecond \ .$$

In this context, it is further noted that each of said parameter may be denoted in the form of mere values especially without respective physical units. As an exemplary alternative, the physical unit of the on-time of the low-side switch can be second(s), whereas the physical unit of the LED voltage can be Volt(s) and the physical unit of the 'voltage second' can be Volt(s) multiplied by second(s).

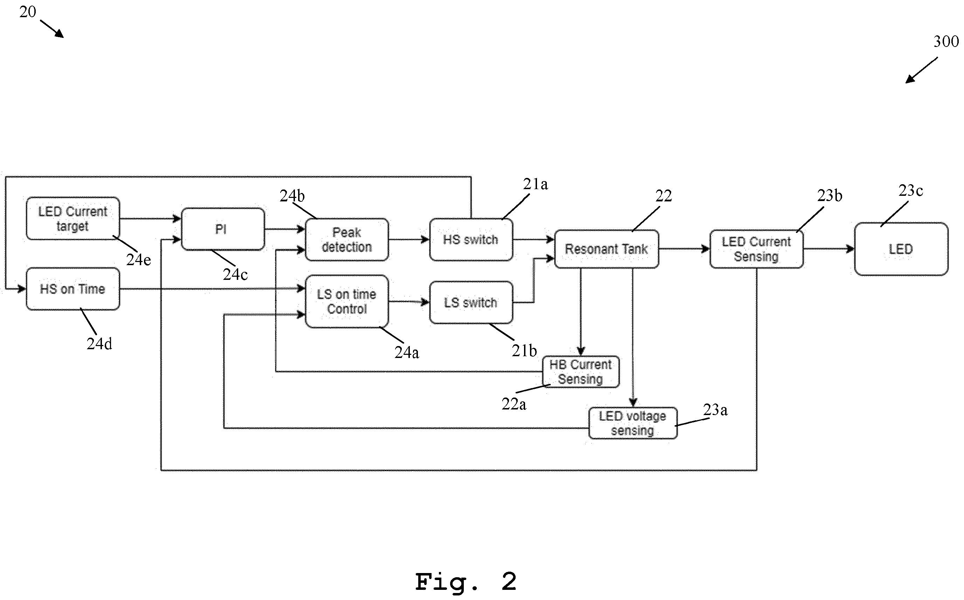

Now, with respect to Fig. 2, an abstract illustration of the first and the second aspect of the invention, such as the resonant hybrid flyback converter 10 or the system 200, respectively, of Fig. 1, is shown especially for explaining corresponding functioning in greater detail. It is noted that all the explanations above analogously apply for Fig. 2 and vice versa.

By analogy with Fig. 1, it is noted that said Fig. 2 additionally illustrates an exemplary embodiment of the inventive system 300 comprising the resonant hybrid flyback converter 20 and the LED-based load, exemplarily the LED 23c, being supplied by the resonant hybrid flyback converter 20.

In accordance with said Fig. 2, the resonant hybrid flyback converter 20 comprises a controlling element, exemplarily a proportional integral controlling element 24c, which can also implemented or comprised by the processing unit 14 of the resonant hybrid flyback converter 10 of Fig. 1.

In this context, the peak detection as already mentioned in the context of Fig. 1 above, which is exemplarily depicted as a peak detection unit 24b of Fig. 2, is based on a controlled variable received from the controlling element, exemplary the proportional integral controlling element 24c.

As it can further be seen from Fig. 2, resonant hybrid flyback converter 20 comprises a LED current sensing unit 23b. In this context, the above-mentioned controlling element, exemplarily the proportional integral controlling element 24c, is configured to form the controlled variable on the basis of the LED current and a target LED current being especially settable as illustrated by the exemplary LED current target block 24e.

With respect to said target LED current, it is noted that the target LED current can be settable by a user especially during operation of the resonant hybrid flyback converter. Additionally or alternatively, the target LED current can be predefined and exemplarily be provided by a memory.

In the light of the LED current sensing unit 23b of Fig. 2, it is noted that the processing unit 14 of Fig. 1 can also be configured to sense a LED current with respect to the LED-based load, exemplarily the LED 13c. In this context, the resonant hybrid flyback converter 10 can comprise further current sensing means 13b being especially connected in series to the LED 13c, wherein said further current sensing means 13b may exemplarily be connected to the processing unit 14.

According to Fig. 2, the resonant hybrid flyback converter 20 may be configured to control the on-time of the low-side switch 21b on the basis of the on-time of the high-side switch 21a, which is illustrated with the aid the low-side on-time control unit 24a being fed with the high-side on-time of block 24d, wherein said block 24d comprising the on-time of the high-side switch 21a is exemplarily fed by the high-side switch 21a.

Especially in the light of said control of the on-time of the low-side switch 21b on the basis of the on-time of the high-side switch 21a, it is noted that the processing unit 14 can also be configured to sense the on-time of the high-side switch 11a. Additionally or alternatively, the processing unit 14 can be configured to control the on-time of the low-side switch 11b on the basis of the on-time of the high-side switch 11a.

For the sake of completeness, all connections according to Fig. 2 are described in the following, wherein at least some equivalents with respect to Fig. 1 are explicitly explained.

A terminal, exemplarily an output, of the above-mentioned block 24e illustrating the target LED current is connected to a first terminal, exemplarily a first input, of the controlling element, exemplarily the proportional integral controlling element 24c, wherein a second terminal, exemplarily a second input, of the controlling element, exemplarily the proportional integral controlling element 24c, is connected to a first terminal, exemplarily an output, of the LED current sensing unit 23b.

Furthermore, a third terminal, exemplarily an output, of the controlling element, exemplarily the proportional integral controlling element 24c, is connected to a first terminal, exemplarily a first input, of the peak detection unit 24b, wherein a second terminal, exemplarily an output, of said peak detection unit 24b is connected to a first terminal, exemplarily an input preferably in the form of the gate terminal of the first field-effect transistor 11a of Fig. 1, of the high-side switch 21a, wherein a second terminal, exemplarily an output preferably in the form of the drain terminal of the first field-effect transistor 11a of Fig. 1, of the high-side switch 21 is connected to a first terminal, exemplarily a first input, of the resonant tank 22.

Moreover, a second terminal, exemplarily a first output, of said resonant tank 22 is connected to a second terminal, exemplarily an input, of the LED current sensing unit 23b, wherein a third terminal, exemplarily a second output, of said LED current sensing unit 23b is connected to a terminal, exemplarily an input, of the LED 23c.

With respect to the above-mentioned high-side switch 21a, it is noted that a third terminal, exemplarily a sensing terminal, of said high-side switch 21a is connected to a first terminal, exemplarily an input, of the block 24d illustrating the on-time of the high-side switch, wherein a second terminal, exemplarily an output, of said block 24d is connected to a first terminal, exemplarily a first input, of the low-side on-time control unit 24a.

With respect to the above-mentioned sensing terminal of the high-side switch 21a, it is noted that said sensing terminal can be seen as the gate terminal or the drain terminal of the first field-effect transistor 11a of Fig. 1. As an alternative, said sensing terminal can be seen as an output of a combinatorial circuit or a sequential logic system, said circuit or system comprising the gate terminal and/or the drain terminal of the first field-effect transistor 11a as an input or inputs, respectively.

Again, with respect to the low-side on-time control unit 24a, it is noted that a second terminal, exemplarily an input, of said low-side on-time control unit 24a is connected a first terminal, exemplarily an input, of the low-side switch 21b, wherein a second terminal, exemplarily an output, of said low-side switch 21b is connected to a third terminal, exemplarily a second input, of the resonant tank 22.

Furthermore, a fourth terminal, exemplarily a second output, of said resonant tank 22 is connected to a first terminal, exemplarily an input, of the half-bridge current sensing unit 22a, wherein a second terminal, exemplarily an output, of said half-bridge current sensing unit 22a is connected to a third terminal, exemplarily a second input, of the above-mentioned peak detection unit 24b.

With respect to the half-bridge current sensing unit 22a, it is noted that said half-bridge current sensing unit 22a can be seen as the current sensing means 12a of Fig. 1 especially in combination with the processing unit 14 according to Fig. 1.

Moreover, a fifth terminal, exemplarily a third output, of the above-mentioned resonant tank 22 is connected to a first terminal, exemplarily an input, of the LED voltage sensing unit 23a, wherein a second terminal, exemplarily an output, of said LED voltage sensing unit 23a is connected to a third terminal, exemplarily a second input, of the above-mentioned low-side on-time control unit 24a.

With respect to the LED voltage sensing unit 23a, it is noted that said LED voltage sensing unit 23a can be seen as the voltage sensing means 13a of Fig. 1 especially in combination with the processing unit 14 according to Fig. 1.

It is further noted that with respect to the elements equipped with reference signs 24a to 24e, it might be particularly advantageous if at least one, preferably each, of said elements is implemented or comprised by a processing unit such as the processing unit 14 according to Fig. 1.

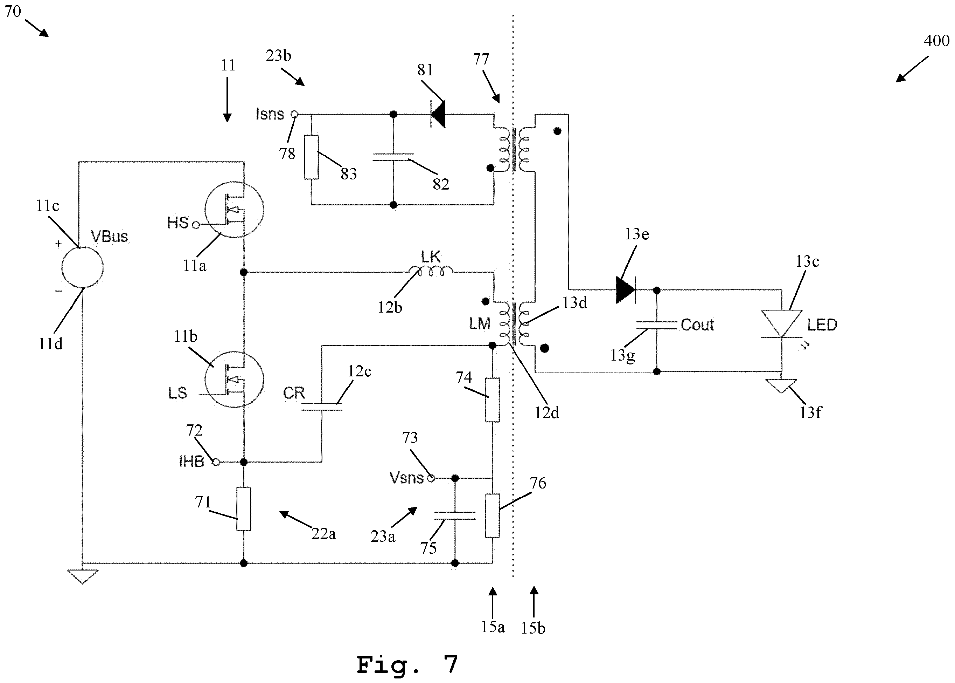

Now, with respect to Fig. 7, an exemplary circuit diagram 70 for further illumination of Fig. 1 or Fig. 2, respectively, is shown. In this context, it is noted that for the sake of compactness, elements having already been explained above are not elucidated again but equipped with the same reference signs.

By analogy with Fig. 1 or Fig. 2, respectively, it is noted that said Fig. 7 additionally illustrates an exemplary embodiment of the inventive system 400 comprising the resonant hybrid flyback converter 70 and the LED-based load, exemplarily the LED 13c, being supplied by the resonant hybrid flyback converter 70.

As it can be seen from said Fig. 7, the half-bridge current sensing 22a is performed at the base of the half bridge 11 exemplarily at terminal 72. In this context, it is noted that Fig. 7 differs from Fig. 1 especially in that the connection of the drain terminal of the second field-effect transistor 11b to the corresponding terminal of the capacitance 12c is not directly connected to the voltage potential 11d but to said terminal 72, wherein the terminal 72, exemplarily being a half-bridge current sensing terminal, is connected to a first terminal of a resistance 71 and a second terminal of said resistance 71 is connected to the voltage potential 11d. It is noted that the terminal 72, exemplarily the half-bridge current sensing terminal, can be connected to the processing unit 14.

Furthermore, in the sense of the LED voltage sensing 23a or the output voltage sensing, respectively, the output voltage or LED voltage, respectively, can be measured at the terminal 73, exemplarily being a LED voltage sensing terminal, especially knowing the winding ratio of the transformer. The measurement may preferably be made when the discharge of the transformer occurs in the blocking phase of the high-side switch 11a. In this context, it is noted that the LED voltage minus the forward voltage of the diode 13e at the output of the transformer is present on the secondary side 15b as long as this diode 13e is conducting. It is noted that the terminal 73, exemplarily the LED voltage sensing terminal, can be connected to the processing unit 14.

It is further noted that in the context of the LED voltage sensing 23a or the output voltage sensing, respectively, Fig. 7 differs from Fig. 1 especially in that the connection between the transformer main inductance 12d and the capacitance 12c is additionally connected to a first terminal of a resistance 74, wherein a second terminal of said resistance 74 is connected to the above-mentioned terminal 73, exemplarily the above-mentioned LED voltage sensing terminal. Additionally, said terminal 73 is connected to the above-mentioned voltage potential 11d via a parallel connection of a resistance 76 and a capacitance 75.

In addition to this, in the sense of the above-mentioned LED current sensing 23b, it is noted that said LED current sensing 23b can be performed on the secondary side 15b by means of a current transformer 77 or a current sensing transformer, respectively, especially at the terminal 78, exemplarily being a LED current sensing terminal. Said current transformer 77 or a side thereof, respectively, can exemplarily be inserted into the connection between the transformer secondary inductance 13d and the diode 13e, especially the anode terminal thereof.

Furthermore, a first terminal of a further side of the current transformer 77 is connected to a first terminal, exemplarily an anode terminal, of a diode 81, wherein a second terminal, exemplarily a cathode terminal, of said diode 81 is connected to the above-mentioned terminal 78, exemplarily the LED current sensing terminal, which can be connected to the processing unit 14. Additionally, said terminal 78 is exemplarily connected to a second terminal of the further side of the current transformer 77 via a parallel connection of a capacitance 82 and a resistance 83.

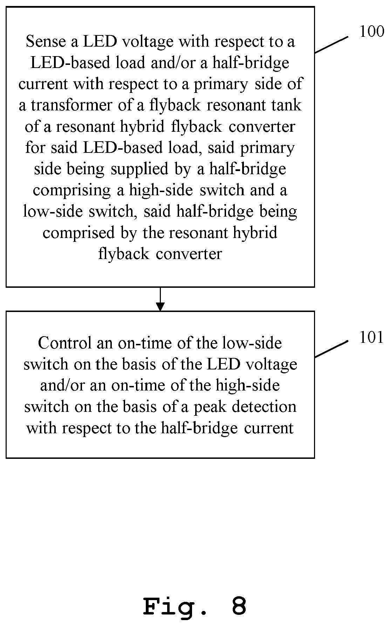

Finally, Fig. 8 illustrates a flow chart of an exemplary embodiment of the inventive method for operating a resonant hybrid flyback converter, especially an inventive resonant hybrid flyback converter such as the one of Fig. 1, for a LED-based load. A first step 100 of said method comprises sensing a LED voltage with respect to the LED-based load and/or a half-bridge current with respect to a primary side of a transformer of a flyback resonant tank of the resonant hybrid flyback converter, said primary side being supplied by a half-bridge comprising a high-side switch and a low-side switch, said half-bridge being comprised by the resonant hybrid flyback converter. Additionally, a second step 101 comprises controlling an on-time of the low-side switch on the basis of the LED voltage and/or an on-time of the high-side switch on the basis of a peak detection with respect to the half-bridge current.

While various embodiments of the present invention have been described above, it should be understood that they have been presented by way of example only, and not limitation. Numerous changes to the disclosed embodiments can be made in accordance with the disclosure herein without departing from the spirit or scope of the invention. Thus, the breadth and scope of the present invention should not be limited by any of the above described embodiments. Rather, the scope of the invention should be defined in accordance with the following claims and their equivalents.

Although the invention has been illustrated and described with respect to one or more implementations, equivalent alterations and modifications will occur to others skilled in the art upon the reading and understanding of this specification and the annexed drawings. In addition, while a particular feature of the invention may have been disclosed with respect to only one of several implementations, such feature may be combined with one or more other features of the other implementations as may be desired and advantageous for any given or particular application.

## Claims

1.   A resonant hybrid flyback converter (10, 20, 70) for a LED-based load (13c, 23c), the resonant hybrid flyback converter (10, 20, 70) comprising:

a half-bridge (11) comprising a high-side switch (11a, 21a) and a low-side switch (11b, 21b),
a flyback resonant tank (12, 22) comprising a transformer with a primary side (15a) and a secondary side (15b), and
a processing unit (14),
wherein the half-bridge (11) is configured to supply said primary side (15a),
wherein the secondary side (15b) is configured to supply the LED-based load (13c, 23c),
wherein the processing unit (14) is configured to sense a LED voltage with respect to the LED-based load (13c, 23c) and/or a half-bridge current with respect to the primary side (15a), and
wherein the processing unit (14) is configured to control an on-time of the low-side switch (11b, 21b) on the basis of the LED voltage and/or an on-time of the high-side switch (11a, 21a) on the basis of a peak detection (24b) with respect to the half-bridge current.

2.   The resonant hybrid flyback converter (10, 20, 70) according to claim 1,
wherein the processing unit (14) is configured to adjust an operating point with respect to controlling the on-time of the high-side switch (11a, 21a) on the basis of controlling the on-time of the low-side switch (11b, 21b).

3.   The resonant hybrid flyback converter (10, 20, 70) according to claim 1 or 2,
wherein the processing unit (14) is configured to control the on-time of the low-side switch (11b, 21b) such that for the case that the LED voltage increases, the on-time of the low-side switch (11b, 21b) decreases especially in a linear, not linear, continuous, stepwise, or ramp manner.

4.   The resonant hybrid flyback converter (10, 20, 70) according to any of the claims 1 to 3,
wherein the processing unit (14) is configured to control the on-time of the high-side switch (11a, 21a) such that for the case that the LED voltage increases, the on-time of the high-side switch (11a, 21a) increases especially in a linear, not linear, continuous, stepwise, or ramp manner.

5. The resonant hybrid flyback converter (10, 20, 70) according to any of the claims 1 to 4, wherein for the case of a stepwise decrease of the on-time of the low-side switch (11b, 21b), the on-time of the high-side switch (11a, 21a) increases in a ramp-shaped manner.

6. The resonant hybrid flyback converter (10, 20, 70) according to any of the claims 1 to 4, wherein for the case of a linear decrease of the on-time of the low-side switch (11b, 21b), the on-time of the high-side switch (11a, 21a) increases in a nonlinear manner especially at least over a substantial portion of a voltage range with respect to the LED voltage.

7. The resonant hybrid flyback converter (10, 20, 70) according to any of the claims 1 to 4, wherein for the case of a nonlinear decrease of the on-time of the low-side switch (11b, 21b), the on-time of the high-side switch (11a, 21a) increases in a linear manner.

8. The resonant hybrid flyback converter (10, 20, 70) according to any of the claims 1 to 7,

    wherein the resonant hybrid flyback converter (10, 20, 70) or the processing unit (14) comprises a controlling element, preferably a proportional integral controlling element (24c), wherein the peak detection (24b) is based on a controlled variable received from the controlling element, preferably the proportional integral controlling element (24c).

9. The resonant hybrid flyback converter (10, 20, 70) according to claim 8, wherein the processing unit (14) is configured to sense a LED current with respect to the LED-based load (13c, 23c), wherein the controlling element, preferably the proportional integral controlling element (24c), is configured to form the controlled variable on the basis of the LED current and a target LED current (24e) being especially settable.

10. The resonant hybrid flyback converter (10, 20, 70) according to any of the claims 1 to 9, wherein the processing unit (14) is configured to sense the on-time of the high-side switch (11a, 21a), and/or wherein the processing unit (14) is configured to control the on-time of the low-side switch (11b, 21b) on the basis of the on-time of the high-side switch (11a, 21a).

11. A system (200, 300, 400) comprising:

    a resonant hybrid flyback converter (10, 20, 70) according to any of the claims 1 to 10, and a LED-based load (13c, 23c) being supplied by said resonant hybrid flyback converter (10, 20, 70).

12. A method for operating a resonant hybrid flyback converter (10, 20, 70) for a LED-based load (13c, 23c), the method comprising the steps of:

    sensing (100) a LED voltage with respect to the LED-based load (13c, 23c) and/or a half-bridge current with respect to a primary side (15a) of a transformer of a flyback resonant tank (12, 22) of the resonant hybrid flyback converter (10, 20, 70), said primary side (15a) being supplied by a half-bridge (11) comprising a high-side switch (11a, 21a) and a low-side switch (11b, 21b), said half-bridge (11) being comprised by the resonant hybrid flyback converter (10, 20), and controlling (101) an on-time of the low-side switch (11b, 21b) on the basis of the LED voltage and/or an on-time of the high-side switch (11a, 21a) on the basis of a peak detection (24b) with respect to the half-bridge current.

13. The method according to claim 12, wherein the method further comprises the step of adjusting an operating point with respect to controlling the on-time of the high-side switch (11a, 21a) on the basis of controlling the on-time of the low-side switch (11b, 21b).

14. The method according to claim 12 or 13, wherein the method further comprises the step of controlling the on-time of the low-side switch (11b, 21b) such that for the case that the LED voltage increases, the on-time of the low-side switch (11b, 21b) decreases especially in a linear, not linear, continuous, stepwise, or ramp manner.

15. The method according to any of the claims 12 to 14, wherein the method further comprises the step of controlling the on-time of the high-side switch (11a, 21a) such that for the case that the LED voltage increases, the on-time of the high-side switch (11a, 21a) increases especially in a linear, not linear, continuous, stepwise, or ramp manner.

Fig. 1

Fig. 2

Fig. 3

Fig. 4

EP 4 387 395 A1

Fig. 5

EP 4 387 395 A1

Fig. 6

Fig. 7

EP 4 387 395 A1

Sense a LED voltage with respect to a LED-based load and/or a half-bridge current with respect to a primary side of a transformer of a flyback resonant tank of a resonant hybrid flyback converter for said LED-based load, said primary side being supplied by a half-bridge comprising a high-side switch and a low-side switch, said half-bridge being comprised by the resonant hybrid flyback converter

100

Control an on-time of the low-side switch on the basis of the LED voltage and/or an on-time of the high-side switch on the basis of a peak detection with respect to the half-bridge current

101

Fig. 8

Europäisches
Patentamt

European
Patent Office

Office européen
des brevets

## EUROPEAN SEARCH REPORT

Application Number

EP 22 21 3667

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y<br>A | US 10 170 974 B1 (OH INHWAN [US] ET AL) 1 January 2019 (2019-01-01)<br>* column 4, line 58 – column 5, lines 15-18; claims 1-4; figures 1, 12A *<br>* column 1, lines 60-64 – column 15, lines 48-55 *<br>* column 14, lines 52-58 – column 15, lines 50-53; figures 9,11 *<br>* column 13, line 27 – columns 16-17 *<br>----- | 1-4, 10-15<br>8,9<br>5-7 | INV.<br>H05B45/14<br>H05B45/385 |
| X<br>Y | EP 3 961 892 A1 (TRIDONIC GMBH & CO KG [AT]) 2 March 2022 (2022-03-02)<br>* paragraph [0002]; figures 2,8 *<br>----- | 1-4, 11-15<br>8-10 | |
| X<br>Y | US 2020/021200 A1 (MEDINA-GARCIA ALFREDO [DE]) 16 January 2020 (2020-01-16)<br>* paragraph [0026]; figures 1,6,9,11 *<br>----- | 1,2, 11-13<br>10 | |

**TECHNICAL FIELDS SEARCHED (IPC)**

H05B

The present search report has been drawn up for all claims

| Place of search | Date of completion of the search | Examiner |
|---|---|---|
| Munich | 8 May 2023 | Müller, Uta |

EPO FORM 1503 03.82 (P04C01)

## ANNEX TO THE EUROPEAN SEARCH REPORT
## ON EUROPEAN PATENT APPLICATION NO.

EP 22 21 3667

This annex lists the patent family members relating to the patent documents cited in the above-mentioned European search report.
The members are as contained in the European Patent Office EDP file on
The European Patent Office is in no way liable for these particulars which are merely given for the purpose of information.

08-05-2023

| Patent document cited in search report | | Publication date | Patent family member(s) | | Publication date |
|---|---|---|---|---|---|
| US 10170974 | B1 | 01-01-2019 | US | 10170974 B1 | 01-01-2019 |
| | | | US | 2019036442 A1 | 31-01-2019 |
| | | | US | 2019036447 A1 | 31-01-2019 |
| | | | US | 2019260282 A1 | 22-08-2019 |
| EP 3961892 | A1 | 02-03-2022 | EP | 3961891 A1 | 02-03-2022 |
| | | | EP | 3961892 A1 | 02-03-2022 |
| | | | WO | 2022048916 A1 | 10-03-2022 |
| | | | WO | 2022048917 A1 | 10-03-2022 |
| US 2020021200 | A1 | 16-01-2020 | CN | 110719029 A | 21-01-2020 |
| | | | DE | 102018116883 A1 | 16-01-2020 |
| | | | US | 2020021200 A1 | 16-01-2020 |

EPO FORM P0459

For more details about this annex : see Official Journal of the European Patent Office, No. 12/82